# FASCICULE DE BREVET EUROPEEN

(11) **EP 0 326 444 B1**
(45) Date de publication et mention de la délivrance du brevet: **13.04.1994**
(21) Numéro de dépôt: 89400046.2
(22) Date de dépôt: 06.01.1989
(51) Int. Cl.: C09J 7/04, B01J 13/02, A41D 27/06

(54) **Produit textile thermocollant comprenant un agent de réticulation microencapsule**
Heisssiegelbares textiles Gebilde, ein mikroverkapseltes Vernetzungsmittel enthaltend
Thermally adhesive textile item comprising a microencapsulated crosslinking agent

(30) Priorité: 08.01.1988 FR 8800143
(43) Date de publication de la demande: 02.08.1989
(73) Titulaire: LAINIERE DE PICARDIE: Société anonyme, 80200 Peronne (FR)
(72) Inventeur: Groshens, Pierre, F-80200 Péronne (FR); Paire, Christian, F-80240 Roisel (FR)
(74) Mandataire: Derambure, Christian

(56) Documents cités:
- FR-A- 1 237 689
- FR-A- 1 507 415
- FR-A- 1 521 409
- US-A- 3 214 402

## Description

L'invention concerne des produits thermocollants utilisables dans l'industrie textile. Ils comportent un support textile enduit d'un polymère thermocollant.

Les tissus de renfort destinés à être contre-coller sur une draperie de façon à améliorer sa tenue, ou renforcer sa nervosité font partie de cette catégorie.

Les supports textiles des produits thermocollants peuvent être de différentes natures, tissés, tricotés ou non tissés. Les propriétés recherchées pour les tissus de renfort ressortent des différentes phases de leur fabrication puis de leur utilisation.
. Le support textile une fois fabriqué est d'abord enduit avec la substance thermocollante. Actuellement, cette enduction est le plus souvent une enduction par point réalisée à l'aide d'un cylindre de gravure. Les polymères thermocollants initialement sous forme de poudre ou de pâte sont portés à une température de l'ordre de 80° qui leur permet d'entrer en fusion et d'adhérer au support. Selon une autre technique, l'enduction est réalisée par transfert. C'est-à-dire, que le polymère thermocollant est déposé sous forme de points par un cylindre de gravure sur un tapis traité pour être non adhésif ; ces points sont alors transférés à une température plus faible sur le support textile.
. Le produit textile thermocollant obtenue dans la première étape est ensuite stocké à température ambiante. Il est alors nécessaire que les différentes couches de ce produit en contact n'adhèrent pas les unes avec les autres. C'est-à-dire que le produit textile thermocollant ne doit pas présenter de "tack". Il faut donc que, revenu au voisinage de la température ambiante, le produite textile utilisé ne soit pas collant.
. Le produit textile thermocollant est ensuite utilisé par les confectionneurs qui l'applique contre les draperies et réalisent le collage du tissu de renfort sur la draperie à l'aide de presse fonctionnant à des températures comprises entre 120 et 180° sous des pressions de quelques décibars et quelques bars pendant des temps relativement courts de l'ordre de 10 à 30 secondes. Au cours de cette phase, les polymères du produit textile thermocollant doivent retrouver leur propriété d'adhésion. Toutefois, ils ne doivent pas avoir une trop faible viscosité lors de cette opération car sinon les polymères traverseront le support textile ou la draperie elle-même causant les retours ou traversées qui rendent les produits obtenus quasiment inutilisables.
. Enfin, les vêtements terminés et donc en particulier les draperies munies de tissu de renfort doivent supportés les différents modes d'utilisation et en particulier de lavage. Le collage réalisé à l'étape précédente doit donc résister à des ambiances très difficiles.

De nombreuses tentatives ont été faites pour réaliser des produits bien adaptés aux différentes contraintes résultant de l'ensemble des phases mentionnées plus haut.

Ainsi, il a été proposé par exemple de réaliser un adhésif constitué de deux ou plusieurs couches de polymères de caractéristique physique différente. En choisissant convenablement la viscosité et la température de fusion de ces différentes couches, on peut ainsi espérant limiter les traversées ou les retours. Toutefois, la mise en oeuvre de cette technique se révèle très délicate.

Le procédé de dépôt de la matière thermocollante sur le substrat textile dit par transfert mentionné plus haut permet d'éviter la pénétration excessive de la matière collante dans le substrat textile.

On a également proposé de déposer sur le substrat textile un polymère thermocollant et de le rendre thermodurcissable par l'action d'un agent de réticulation ultérieurement mis à son contact.

Le but de la présente invention est donc la réalisation d'un produit textile thermocollant, utilisable notamment comme tissu de renfort, qui puisse être contrecollé sans retours ni traversées, et soit résistant à l'usage, particulièrement aux agents de nettoyage des vêtements.

On connait par ailleurs la micro encapsulation qui permet l'inclusion de substances au sein d'un matériau support. Ainsi, les substances incluses ne sont pas en contact direct avec leur environnement. La micro capsulation a reçu des applications dans le domaine pharmaceutique, le domaine agro-alimentaire ou dans les technologies bio-médicales.

Dans le brevet américain US 4 483 974, il a été décrit un procédé de fabrication de microcapsules contenant des isocyanates et capable de se libérer par fusion de la paroi de la capsule lorsque celle-ci est portée à une température supérieure à 100°.

L'objectif de l'invention est la réalisation d'un produit thermocollant qui satisfasse l'ensemble des contraintes mentionnées plus haut et dont la composition puisse être adaptée en fonction des différents textiles auxquels est destiné le produit thermocollant.

Des microcapsules ou des microsphères renfermant un agent de réticulation destiné à agir sur un polymère thermo-adhésif sont donc connus.
Selon l'invention, lesdites microcapsules ou microsphères renferment un agent de réticulation destiné à agir sur un polymère thermo-adhésif, lesdites microcapsules ou miscrosphères étant incorporées avec le polymère thermoadhésif à la couche adhésive d'un entoilage textile thermocollant, ledit entoilage comprenant un support textile sur la surface duquel est déposée par points ladite couche adhésive, le polymère thermo-adhésif n'étant pas réticulé, l'agent de réticulation étant libérable par l'action de la chaleur, de la pression ou d'un rayonnement.

L'invention sera mieux comprise à la lecture de la description qui va suivre et des exemples de réalisation qui l'accompagnent.

Compte tenu du problème posé, on a recherché un produit dont la couche adhésive conserve ses propriétés thermoplastiques jusqu'au contre-collage au collage final. Il est souhaitable que ce collage soit définitif. Afin de résoudre ce problème, il apparaît souhaitable que le polymère thermoplastique et thermoadhésif soit modifié lors du collage de façon à devenir thermodurcissable. D'une manière connue, cette transformation peut être obtenue par l'action d'un agent de réticulation.

Selon l'invention, l'agent de réticulation est incorporé dès la fabrication du produit thermocollant à la couche adhésive mais n'est libéré que lors du collage final ou contre-collage.

Cet effet est obtenu en isolant l'agent de réticulation par micro encapsulation. Les microcapsules sont intimement mélangées au polymère thermoadhésif et sont libérées par une action extérieure qui peut être l'élévation de la température ou l'augmentation de la pression. Le procédé de micro encapsulation est choisi de telle sorte que cette libération se produise dans les conditions habituelles du contre-collage c'est-à-dire à des températures comprises entre 130 et 150° ou des pressions supérieures à deux bars.

Ainsi, la couche adhésive peut subir les différents procédés d'enduction du support textile et classiquement utilisés. Par exemple, le support textile peut être enduit à l'aide d'un cylindre de photogravure. Le mélange de ces constituants initialement sous forme pâteuse est alors porté à une température avoisinant 90° qui lui permet de passer à l'état liquide. Sous cet état sa mouillabilité est suffisante pour qu'elle adhère au support textile.

Selon un autre procédé qui s'est révélé très efficace, la couche adhésive est déposée également sous forme d'un réseau de points sur un tapis non adhésif dit tapis de transfert. Cette couche est alors transférée à une température inférieure à sa température de liquéfaction sur le support textile. Ce dernier procédé permet d'éviter la pénétration du support textile par la couche adhésive tout en procurant une bonne adhésion.

Après refroidissement, le produit thermocollant n'est plus adhésif et, ne présente pas de "tack" et peut donc être stocké facilement.

Lors du contre-collage, le produit thermocollant est porté à une température de l'ordre de 130° et à une pression de l'ordre de trois bars.

Deux phénomènes se produisent alors simultanément, d'une part le polymère thermocollant se liquéfie sous l'effet de la température, d'autre part, l'action de l'agent de réticulation le rend thermodurcissable.

Ces deux phénomènes ont des effets contradictoires sur la viscosité et le choix convenable de la vitesse respective de ces deux réactions permet de contrôler cette viscosité. Il est ainsi possible de rendre la couche adhésive suffisamment liquide pour qu'elle mouille l'élément, par exemple la draperie destinée à recevoir le produit thermocollant et ainsi assure le collage, sans pour autant que par une trop faible viscosité elle tende à traverser cet élément ou à produire un effet de retour sur son support.

La viscosité et sa variation en fonction de la température est fonction de l'ensemble des constituants de la couche adhésive et de leurs proportions. Il est possible d'introduire dans cette couche un catalyseur dont la concentration contribue à déterminer la vitesse de la réaction produite lors de l'activation de l'agent de réticulation. L'action sur la seule concentration de ce catalyseur permet alors de maîtriser la viscosité de la couche et donc de produire l'effet recherché.

Les différents procédés de micro encapsulation peuvent être mis en oeuvre pour obtenir le produit de l'invention.

La micro encapsulation peut être réalisée par l'intermédiaire de microcapsules qui sont des particules sphériques constituées d'une enveloppe solide contenant l'agent de réticulation. Ainsi, chaque microcapsule constitue un système réservoir.

Il est également possible de réaliser des micro sphères qui sont des particules également sphériques mais constituées d'un réseau continu de matériau support dans lequel est dispersé l'agent de réticulation.

La libération de l'agent de réticulation peut être obtenue par l'effet de la pression. Les microcapsules peuvent être alors réalisées par polycondensation interfaciale entre des monomères par exemples des monomères d'isocyanates ou des chlorures d'acide et un monomère aminé. Les techniques de polymérisation procurent également des possibilités de micro encapsulation tout à fait satisfaisantes. Ces méthodes permettent de réaliser une capsule relativement rigide qui rompt sous une pression donnée.

L'agent de réticulation peut également être libéré par une élévation de la température c'est-à-dire par fusion des microcapsules ou micro sphères. Ceux-ci peuvent être obtenus soit par coascervation simple ou complexe ou également par la technique d'évaporation du solvant. L'agent de réticulation est alors enrobé par un polymère thermoplastique fusible à la température recherchée. Le polymère utilisé sera de préférence inerte vis-à-vis de l'agent réticulant. Les polyoléfines sont bien adaptés à cet usage et peuvent avoir des points de fusion compris entre 100 et 200°.

Les microcapsules peuvent également consister en une enveloppe polymère thermoplastique insensible à l'agent de réticulation et à l'intérieur de laquelle se trouve également un gaz par exemple de l'isobutane. Sous l'effet de la chaleur sa pression augmente jusqu'à la rupture de l'enveloppe. L'agent réticulant est ainsi libéré.

Les polymères thermocollants pouvant être utilisés sont la plupart de ceux habituellement mis en oeuvre par les enducteurs. Ceux peuvent être par exemple des copolyamides, des copolyesters, des polyétylènes, des éthylène acétates de vinyl, des chlorures de vinyl, des polyuréthanes ... Les polymères les mieux adaptés à ce type d'application sont ceux qui présentent un taux important de groupements fonctionnels sur la chaîne polymérique et qui sont capables de réagir avec les agents de réticulation de polymérisation. C'est le cas des polycopolymères éthylène-acide acrylique, les polyoléfines greffées, les therpolymères éthylène-ester acrylique - anydhride maléïque, les polyuréthanes acryliques, les vinylacryliques.

La réticulation peut être obtenue soit par des agents de réticulation ce sont par exemple des isocyanates polyfonctionnels, des aziridines polyfonctionnels, les résines mélanines formaldéides, les dérivées phénolformaldéides, les complexes de zinc et de ziaconium, les polyamines, les polyétyléimines, ...

Ce peuvent être des agents de polymérisation thermiques, dérivés de péroxyde ou produit capable de rompre une liaison homolytiquement afin de donner des radicaux libres capables d'initier la réaction de polyermisation radicalaire.

Enfin, ce peuvent être des agents de polymérisation par irradiation tels que les photoinitiateurs ou les monomères oligomères acryliques vinyliques ou dérivés.

Les supports textiles peuvent être des différents types habituellement rencontrés dans les adhésifs textiles, le support peut être tricoté, tissé, non tissé.

L'invention permet d'obtenir des contre-collages et très résistants sur de nombreuses matières aussi bien des draperies ou tout support textile, des supports plastiques ou métalliques.

Selon un exemple de réalisation, un produit thermocollant peut être obtenu par l'enduction par points d'un tissu de triplure selon une maille tramée de 17 mesh à l'aide d'un cylindre de gravure. La couche adhésive sera réalisée à partir d'un mélange pâteux comportant :
. 55 parties en poids d'une solution à 1,4 % de polyacrylate d'amonium,
. 4 parties en poids d'acide stéarique très finement réparti,
. 38 parties en poids de poudre de copolyamide d'une granulométrie inférieure à 100 microns avec un point de fusion de 90° C,
. 3 parties en poids de microcapsules contenant des isocyanates et capables de se libérer par fusion de la paroi de la capsule à partir de 100 à 110°C. De telles microcapsules peuvent être obtenues selon le procédé décrit dans le brevet américain N° 4 483 974.

Le poids surfacique de la partie humide ainsi obtenu après enduction est d'environ 40g par m². Le produit thermocollant est alors soumis à un séchage dans un four régulé à 95°C et le poids surfacique de sa partie humide est réduit à 20g par m². Lors du contre-collage sur un substrat sur une presse thermocollante fonctionnant à une température d'environ 140°, les isocyanates contenus dans les microcapsules sont libérées et la réticulation du polymère est ainsi réalisée la couche adhésive passe donc lors de sa montée en température par un état liquide qui permet le mouillage du substrat puis sous l'effet de la réticulation elle devient thermodurcissable, assurant ainsi un collage définitif et de haute qualité.

## Revendications

1. Microcapsules ou microsphères renfermant un agent de réticulation destiné à agir sur un polymère thermo-adhésif caractérisé en ce que ledites microcapsules ou microsphères sont incorporées avec le polymère thermoadhésif à la couche adhésive d'un entoilage textile thermocollant, ledit entoilage comprenant un support textile sur la surface duquel est déposée par points ladite couche adhésive, le polymère thermo-adhésif n'étant pas réticulé, l'agent de réticulation étant libérable par l'action de la chaleur, de la pression ou d'un rayonnement.

2. Microcapsules selon la revendication 1, caractérisé en ce que la vitesse de la réaction de réticulation est déterminée de façon que lorsqu'elle est soumise à une température comprise entre 110 et 150°C, la couche adhésive de l'entoilage textile thermocollant passe pendant une courte durée par un état dans lequel elle est adhésive puis devient thermodurcissable.

3. Microcapsules selon l'une quelconque des revendications 1 et 2, caractérisé en ce que le polymère thermoadhésif est un copolyamide ou l'un de ses dérivés.

4. Microcapsules selon l'une quelconque des revendications 1 et 2, caractérisé en ce que le polymère thermoadhésif est un polyester ou l'un de ses dérivés.

5. Microcapsules selon l'une quelconque des revendications 1 à 4, caractérisé en ce que l'agent de réticulation est un isocyanate.

6. Microcapsules selon l'une quelconque des revendications 1 à 4, caractérisé en ce que l'agent de réticulation est une aziridine.

## Claims

1. Microcapsules or microspheres containing a crosslinking agent intended to act on a thermoadhesive polymer, wherein said microcapsules or microspheres are incoporated with the thermoadhesive polymer on the adhesive layer of a textile thermoadhesive interlining, said textile thermoadhesive interlining including a textile support on the surface of which said adhesive layer is deposited in a dot pattern, the thermoadhesive polymer not being crosslinked, the crosslinking agent being able to be freed via the action of heat, pressure or a radiation.

2. Microcapsules according to claim 1, wherein the speed of the crosslinking reaction is determined so that, when subjected to a temperature of between 110 and 150°C, the adhesive layer of the textile thermoadhesive interlining passes for a short period through a state in which it is adhesive and then becomes thermosetting.

3. Microcapsules according to claim 1 or 2, wherein the thermoadhesive polymer is a copolyamide or one of its derivatives.

4. Microcapsules according to claim 1 or 2, wherein the thermoadhesive polymer is a polyester or one of its derivatives.

5. Microcapsules according to any one of claims 1 to 4, wherein the crosslinking agent is an isocyanate.

6. Microcapsules according to any one of claims 1 to 4, wherein the crosslinking agent is an aziridine.

## Patentansprüche

1. Mikrokapseln oder Mikrokugeln, die ein Vernetzungsmittel mit der Funktion, auf ein unter Wärmeeinwirkung klebendes Polymer einzuwirken, einschließen, dadurch gekennzeichnet, daß die Mikrokapseln oder Mikrokugeln mit dem unter Wärmeeinwirkung klebenden Polymer auf einer Klebschicht eines unter Wärmeeinwirkung klebenden Textilgewebes angebracht sind, das aus einer Textilunterlage besteht, auf der punktweise die Klebschicht angebracht ist, wobei das unter Wärmeeinwirkung klebende Polymer noch nicht vernetzt ist und das Vernetzungsmittel unter der Wirkung von Wärme Druck oder Strahlung freigesetzt werden kann.

2. Mikrokapseln nach Patentanspruch 1, dadurch gekennzeichnet, daß die Geschwindigkeit der Vernetzungsreaktion so festgelegt ist, daß die Klebschicht des unter Wärmeeinwirkung klebenden Textilgewebes bei einer Wärmeeinwirkung zwischen 110 °C und 150 °C während einer kurzen Zeit in einen Zustand versetzt wird, in dem sie klebend ist, und anschließend duroplastisch aushärtet.

3. Mikrokapseln nach Patentanspruch 1 und 2, dadurch gekennzeichnet, daß das unter Wärmeeinwirkung klebende Polymer ein Copolyamid oder ein Derivat davon ist.

4. Mikrokapseln nach Patentanspruch 1 und 2, dadurch gekennzeichnet, daß das unter Wärmeeinwirkung klebende Polymer ein Polyester oder ein Derivat davon ist.

5. Mikrokapseln nach Patentanspruch 1 bis 4, dadurch gekennzeichnet, daß das Vernetzungsmittel ein Isozyanat ist.

6. Mikrokapseln nach Patentanspruch 1 bis 4, dadurch gekennzeichnet, daß das Vernetzungsmittel ein Aziridin ist.
